# DEMANDE DE BREVET EUROPEEN

(11) **EP 1 489 445 A1**
(43) Date de publication de la demande: **22.12.2004**
(21) Numéro de dépôt: 04291538.9
(22) Date de dépôt: 17.06.2004
(51) Int. Cl.: G02B 6/16, G02B 6/14

(54) **Guide d'onde à filtre optique non réflecteur avec un réseau de Bragg en angle**

(30) Priorité: 20.06.2003 FR 0307445
(71) Demandeur: ALCATEL, 75008 Paris (FR)
(72) Inventeur: De Barros, Carlos, 92100 Boulogne-Billancourt (FR); Molina, Marianne, 75013 Paris (FR); Riant, Isabelle, 91400 Orsay (FR)
(74) Mandataire: Fournier, Michel

(57) **Abrégé**

Un filtre optique comprend un premier convertisseur de mode, convertissant un signal optique incident se propageant selon un mode de propagation incident en un signal se propageant selon un mode de propagation d'ordre supérieur (LPnm), un second convertisseur de mode, convertissant le signal optique d'ordre de propagation supérieur (LPnm) en un signal se propageant selon le mode de propagation incident, et un réseau en angle (SBG) disposé entre lesdits premier et second convertisseurs de mode, et adapté pour coupler en contra-propagation le signal optique d'ordre de propagation supérieur (LPnm) sur ledit mode incident.

Application à l'égalisation de gain et au multiplexage de signaux DWDM.

## Description

La présente invention concerne le domaine des filtres optiques constitués de réseaux de Bragg photo-inscrits dans des guides d'onde. L'invention concerne plus particulièrement des filtres égaliseurs de gain.

Un filtre égaliseur de gain, connu sous l'acronyme de GFF (pour "Gain Flattening Filter" en anglais), peut être constitué par une concaténation de réseaux de Bragg photo-inscrits sur des portions de guides d'onde tels que des fibres optiques ou des guides planaires. Un guide d'onde est classiquement composé d'un coeur optique, ayant pour fonction de transmettre et éventuellement d'amplifier un signal optique, et d'une gaine optique, ayant pour fonction de confiner le signal optique dans le coeur. A cet effet, les indices de réfraction du coeur n₁ et de la gaine n₂ sont tels que n₁>n₂. Comme cela est bien connu, la propagation d'un signal optique dans un guide d'onde monomode se décompose en un mode fondamental guidé dans le coeur et en des modes secondaires guidés sur une certaine distance dans l'ensemble coeur-gaine, appelés modes de gaine.

Le coeur et/ou la gaine du guide peuvent être dopés de manière à être rendus photo-sensibles pour une inscription de réseau de Bragg, par exemple avec du Germanium (Ge).

Des réseaux classiquement utilisés pour des applications à l'égalisation de gain sont des réseaux en angle ou réseaux inclinés, connus sous l'acronyme de SBG pour Slanted Bragg Grating en anglais. De tels réseaux peuvent être rendus quasiment non réflecteurs et sont conçus pour permettre un couplage du mode fondamental dans les modes de gaine. Il est ainsi possible de s'affranchir des isolateurs optiques indispensables lorsque l'égalisation de gain est réalisée avec des réseaux réflecteurs tels que les réseaux de Bragg droits.

Les filtres égaliseurs de gain peuvent être associés à des amplificateurs optiques répartis régulièrement le long de lignes de transmission. En effet, les amplificateurs optiques ne fournissent généralement pas une amplification égale pour toutes les longueurs d'onde des signaux transmis sur les différents canaux d'une même ligne de transmission.

En particulier, avec le développement des applications de transmission dense par multiplexage en longueur d'onde (DWDM, pour Dense Wavelength Division Multiplexing), les disparités d'amplification sur une bande passante donnée ont tendance à s'accentuer et les tolérances des égaliseurs de gain deviennent de plus en plus faibles, c'est-à-dire que la réponse spectrale du filtre égaliseur doit compenser au plus près la courbe de gain de l'amplification. Ainsi, les applications DWDM nécessitent la réalisation de filtres élémentaires de plus en plus étroits et présentant des contrastes de plus en plus accentués. Un cahier des charges imposant un contraste de 5 dB sur une bande spectrale inférieure à 2nm est courant pour ce genre d'application. A partir de tels filtres élémentaires contrastés, il est possible de réaliser une concaténation de filtres formant un profil complexe correspondant à la courbe d'amplification.

Une solution possible pour réduire la largeur spectrale d'un filtre élémentaire tout en augmentant son taux de réjection est d'améliorer le couplage de mode entre le mode fondamental et les modes de gaine, et pour ce faire d'augmenter substantiellement l'intégrale de recouvrement entre ces modes. On définit l'intégrale de recouvrement comme l'aire délimitée par le mode fondamental et les modes de gaine, pondérée par le profil de photosensibilité du guide.

Plusieurs techniques ont été proposées dans l'art antérieur pour augmenter cette intégrale de recouvrement. Une première solution peut consister à augmenter le diamètre du coeur afin d'élargir le mode fondamental et augmenter ainsi le recouvrement. Cette solution est cependant limitée par la perte du caractère monomode de la propagation du signal lorsque le diamètre du coeur devient trop grand. De plus, cette solution ne permet pas d'atteindre les caractéristiques requises pour les applications DWDM.

Une autre solution consiste à rendre la gaine photosensible en plus du coeur pour augmenter la pondération de l'aire de recouvrement. On peut citer par exemple la publication de M.J Holmes et al., « Ultra Narrow-Band Optical Fiber Sidetap Filters », Technical Digest of ECOC'98. Cette publication décrit une fibre optique ayant des profils d'indice et de photosensibilité spécifiques permettant l'inscription d'un SBG avec une bande passante de 5nm, ce qui reste cependant trop large pour les applications DWDM.

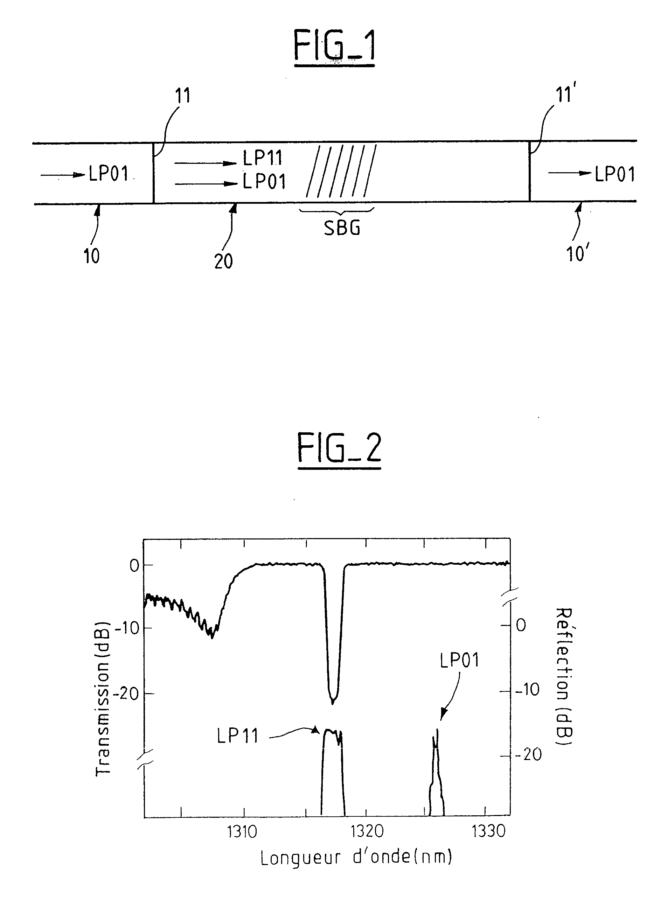

Une solution alternative est décrite dans la publication de T. Strasser et al., « Reflective mode conversion with UV-induced phase grating in two-mode fiber », Technical Digest of OFC paper FB3 1997. Cette solution, illustrée sur la figure 1, consiste à coupler le mode fondamental LP01 dans un autre mode guidé, en particulier le LP11. Un réseau en angle SBG est inscrit dans une fibre optique faiblement multimode 20, dite "two modes fibers" pour fibre bimode, c'est-à-dire permettant de guider deux modes (LP01 et LP11). Cette fibre bimode 20 est soudée 11, 11' entre deux fibres monomodes 10, 10' transmettant le signal optique monomode à filtrer. Le mode incident LP01 est alors fortement couplé dans le mode guidé LP11, en plus du couplage dans les modes de gaine. On obtient alors, tel qu'illustré sur la figure 2, un filtre étroit contrasté à une longueur d'onde donnée correspondant au couplage du LP01 dans le LP11.

Cette solution permet de réaliser un filtre optique dont la bande passante est suffisamment étroite pour les applications DWDM (de l'ordre du nanomètre), mais deux autres problèmes surgissent.

D'une part, on observe des couplages parasites dans les modes de gaine. En effet, le mode fondamental LP01 est fortement couplé dans le mode guidé LP11, mais le couplage "classique" du mode fondamental dans les modes de gaine crée une traînée dans la réponse spectrale du filtre (visible sur le spectre de transmission de la figure 2). Cette traînée empêche l'utilisation d'un tel filtre dans une concaténation pour construire un filtre complexe d'égalisation de gain.

D'autre part, la réflexion ou couplage en contra-propagatif du LP11 est trop élevée par rapport à la limite requise de 30dB. Cette réflexion provient essentiellement du recouplage du mode LP11 sur le mode LP01 au niveau de la soudure avec la fibre monomode, ce qui introduit des réflexions dans la fibre de transmission du signal incident.

D'autres publications reprennent ce principe de filtre et tentent de réduire la réflexion par des profils de fibre particuliers. On peut par exemple citer la publication de H.Renner et al. " Suppression of Backreflection in tilted short-period mode-converting gratings", Technical Digest of BGPP"01.

La présente invention propose un filtre optique qui permette d'atteindre un fort contraste sur une bande passante étroite sans réflexion.

A cet effet, l'invention propose un filtre optique non réflecteur comprenant :
- un premier convertisseur de mode, convertissant un signal optique incident se propageant selon un mode incident en un signal se propageant selon un mode de propagation d'ordre supérieur (LPnm) à celui dudit mode incident;
- un second convertisseur de mode, convertissant le signal optique d'ordre de propagation supérieur (LPnm) en un signal se propageant selon le mode de propagation incident ;
- un réseau de Bragg en angle (SBG) disposé entre lesdits premier et second convertisseurs de mode, et adapté pour coupler en contra-propagation le signal optique d'ordre de propagation supérieur (LPnm) sur ledit un mode incident.

Selon une caractéristique, le signal optique incident se propage selon le mode fondamental LP01.

Selon les modes de réalisation, le mode d'ordre supérieur est le mode LP11 ou le mode LP0m.

Selon un mode de réalisation, le réseau, le premier et le second convertisseurs de modes sont intégrés dans le même guide d'onde continu.

Selon un mode de réalisation, au moins un des convertisseurs de mode est un effilement du guide optique.

Selon un mode de réalisation, au moins un des convertisseurs de mode est un réseau à long pas (LPG).

Selon un mode de réalisation, au moins un des convertisseurs de mode est un convertisseur en espace libre.

Selon un mode de réalisation, le réseau (SBG) est à pas variable (chirpé).

Selon un mode de réalisation, le réseau (SBG) est apodisé.

Selon un mode de réalisation, le filtre comprend une pluralité de réseaux (SBG) concaténés.

Selon un mode de réalisation, le réseau (SBG) est échantillonné.

L'invention concerne aussi un égaliseur de gain comprenant un filtre optique selon l'invention.

L'invention concerne également un multiplexeur comprenant un filtre optique selon l'invention.

Les particularités et avantages de l'invention apparaîtront plus clairement à la lecture de la description qui suit, donnée à titre d'exemple illustratif et non limitatif, et faite en référence aux figures annexées qui représentent :
- la figure 1, déjà décrite, un filtre optique selon l'art antérieur ;
- la figure 2, déjà décrite, un spectre de transmission du filtre de la figure 1 ;
- la figure 3, un schéma de principe du filtre selon l'invention ;
- la figure 4, un schéma d'un premier mode de réalisation du filtre selon l'invention ;
- la figure 5, un schéma d'un deuxième mode de réalisation du filtre selon l'invention ;
- la figure 6a, un graphe du couplage en réflexion du mode fondamental en fonction de l'angle du réseau SBG ;
- la figure 6b, un spectre de transmission d'un filtre selon un modèle de l'art antérieur ;
- la figure 7a, un graphe du couplage en réflexion du mode LP11 en fonction de l'angle du réseau SBG ;
- la figure 7b, un spectre de transmission d'un filtre selon l'invention.

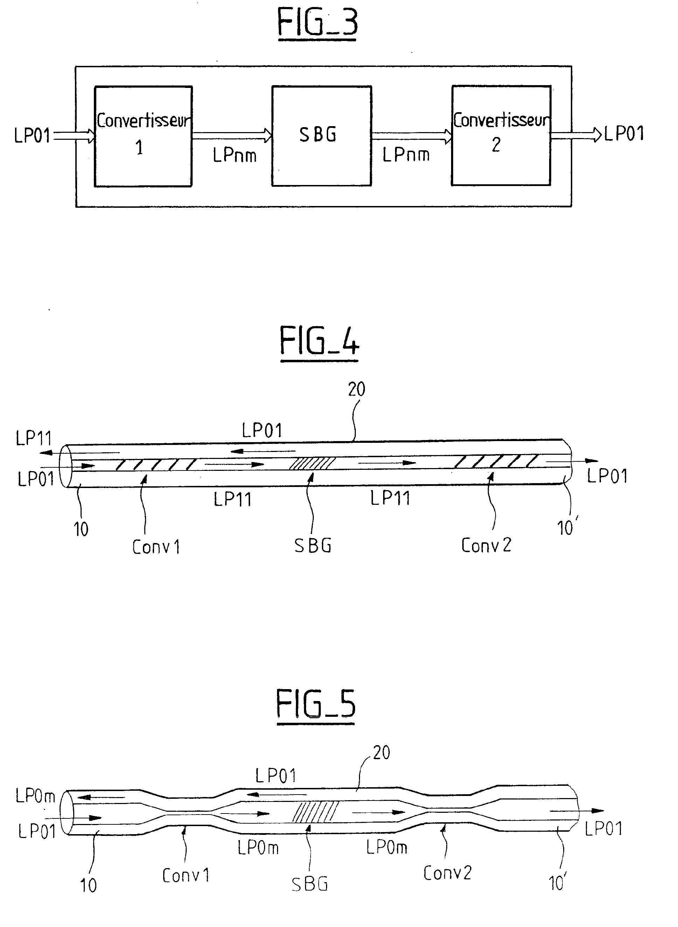

La figure 3 donne un schéma de principe du filtre selon l'invention. Un réseau de Bragg en angle SBG couple l'énergie d'un signal se propageant selon un mode d'ordre supérieur LPnm sur le mode fondamental LP01. A cet effet, un réseau en angle SBG est inscrit dans une fibre multimode disposée entre deux convertisseurs de mode.

Dans un filtre optique comprenant une entrée et une sortie, un signal incident est injecté. Un premier convertisseur convertit ce signal incident en un signal se propageant selon un mode d'ordre supérieur LPnm. L'énergie de ce signal d'ordre supérieur LPnm est alors fortement couplée en contra-propagation par le réseau SBG sur le mode fondamental guidé LP01. On obtient ainsi en sortie du réseau un signal sur un mode d'ordre supérieur filtré sur une étroite bande passante avec un fort contraste. Un deuxième convertisseur de mode convertit le signal spectralement filtré se propageant vers la sortie du filtre optique selon le mode LPnm en un signal filtré se propageant selon le mode incident initial (LP01).

Ainsi, contrairement aux filtres de l'art antérieur qui couplent en co-propagation le mode fondamental LP01 sur un autre mode guidé LP11, l'invention propose de coupler en contra-propagation un mode d'ordre supérieur, tel que le mode LP11 par exemple, sur le mode fondamental LP01. Ce couplage à partir d'un mode d'ordre supérieur permet d'atteindre les contrastes requis pour les applications DWDM, et permet en outre de s'affranchir des problèmes de traînée dus au couplage dans les modes de gaine et des problèmes de contre réflexion.

En effet, par un dimensionnement approprié du réseau SBG, le couplage en contra-propagation des modes d'ordre supérieur LPnm dans les modes de gaine peut être rendu négligeable par rapport au couplage dans le mode fondamental LP01.

Par ailleurs, les convertisseurs de mode annulent toute réflexion possible. L'angle d'inscription du SBG sera choisi en fonction d'une réflexion nulle pour le mode d'ordre supérieur, et toute réflexion du mode LP01 sera reconvertie en mode LPnm. Or ce mode d'ordre supérieur LPnm ne se propage pas dans la fibre ayant apporté le signal incident, ne créant donc pas de réflexion dans la ligne de transmission.

La figure 4 illustre un mode de réalisation du filtre selon l'invention. Une fibre optique monomode 10 transmet un signal optique incident selon un mode de propagation fondamental LP01. Un premier convertisseur Conv1 convertit la totalité de l'énergie optique du mode LP01 dans un mode d'ordre supérieur LPnm.

Par exemple, un convertisseur 100% pour transférer l'énergie du mode LP01 sur le mode LP11 peut être obtenu par un réseau à long pas, dit LPG pour Long Period Grating. On peut citer à cet effet les publications de Kyung S. Lee et al, "Transmissive Tilted grating for LP01 -LP11 mode coupling", JOSA A, vol 18, n°5, mai 2001, et de Kyung S. Lee et al, "Mode coupling in spiral fibre grating", Elec. Letters, Vol 37, n°3, Feb 2001. Un réseau LPG peut également être utilisé pour convertir l'énergie du mode LP01 sur le mode LP02, en se référant à la publication de S. Ramachandran et al, "Large Bandwidth, highly dispersive efficient coupling using LPG in dispersion fibers", Tech Digest of OFC'01 -MC2-1.

La description de la figure 4 est donnée avec un exemple de conversion sur le mode LP11.

Une fibre faiblement multimode 20 est disposée en sortie du premier convertisseur Conv1 guidant au moins le mode LP01 et le mode LP11. Un réseau en angle SBG est inscrit dans cette portion de fibre multimode. L'angle du réseau est choisi de manière à éviter tout couplage en contra-propagation du mode LP11, porteur de l'énergie optique, sur lui-même. Ainsi, le réseau SBG va coupler en contra-propagation la majeure partie de l'énergie du mode LP11 sur le mode fondamental LP01 et très peu dans les modes de gaine, créant ainsi un filtre très étroit et contrasté. Le signal optique en sortie du réseau SBG se propage selon le mode LP11 filtré. Une partie de l'énergie optique est transmise en contra-propagatif par le mode LP01. Cette réflexion est cependant stoppée par le convertisseur Conv1 qui convertit l'énergie réfléchie portée par le mode LP01 dans le mode LP11 qui n'est ensuite pas guidé dans la fibre monomode 10. Aucune réflexion sur le mode LP01 ne vient donc perturber la fibre de transmission 10.

Le signal filtré transmis en sortie du SBG selon le mode LP11 est ensuite converti par un deuxième convertisseur Conv2, tel qu'un autre LPG, en un signal, de même forme spectrale, se propageant selon le mode LP01 dans une fibre de transmission monomode 10'.

La figure 5 illustre un autre mode de réalisation de l'invention. Les mêmes éléments décrits à la figure 4 portent les mêmes références. Selon ce mode de réalisation, les convertisseurs Conv1, Conv2 sont constitués par des effilements du guide optique, dits taper en terminologie anglaise. De tels convertisseurs sont adaptés pour convertir 100% de l'énergie du mode fondamental LP01 dans un mode d'ordre supérieur pair LP0m, par exemple le mode LP02.

Un mode de réalisation, non illustré, consiste à réaliser les convertisseurs de mode en espace libre, tels que les convertisseurs décrits dans la demande de brevet WO 99/49342.

Selon les modes de réalisation décrits en référence aux figures 4 et 5, l'ensemble du filtre peut être disposé sur un guide d'onde continu. Un tel mode de réalisation réduit les pertes optiques et permet une meilleure intégration du composant dans une ligne de transmission par exemple.

Le caractère monomode ou multimode d'une fibre est défini par la variable V qui détermine le nombre de modes susceptibles de se propager dans une fibre. Cette variable, qui dépend de la longueur d'onde, est proportionnelle au diamètre du coeur de la fibre et à la différence d'indice entre le coeur et la gaine de la fibre. A 1550nm, V inférieur à 2,407 qualifie une fibre monomode et V compris entre 2,4 et 3,8 qualifie une fibre à deux modes.

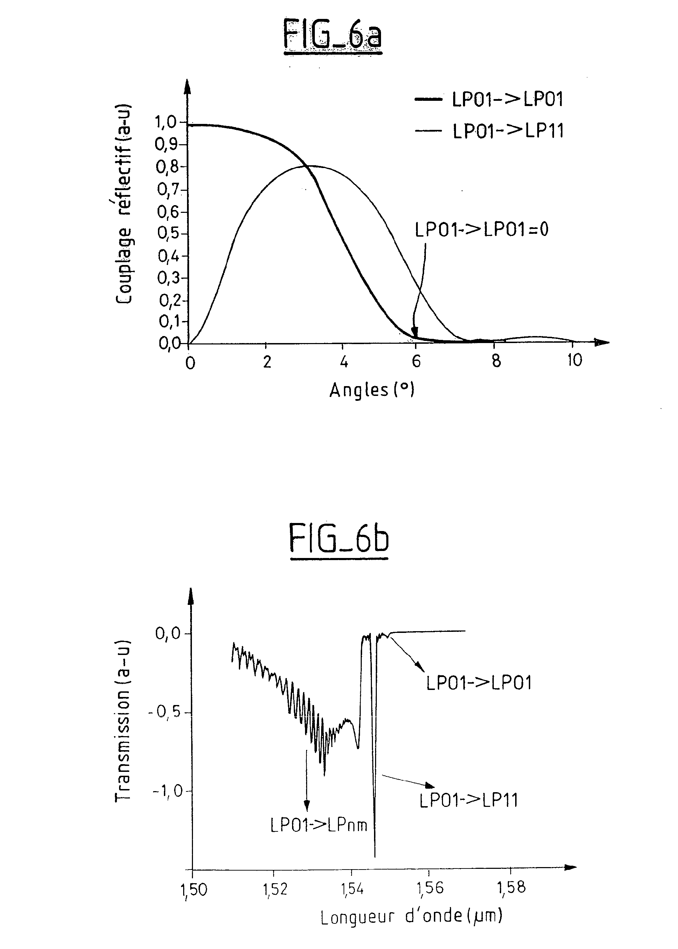

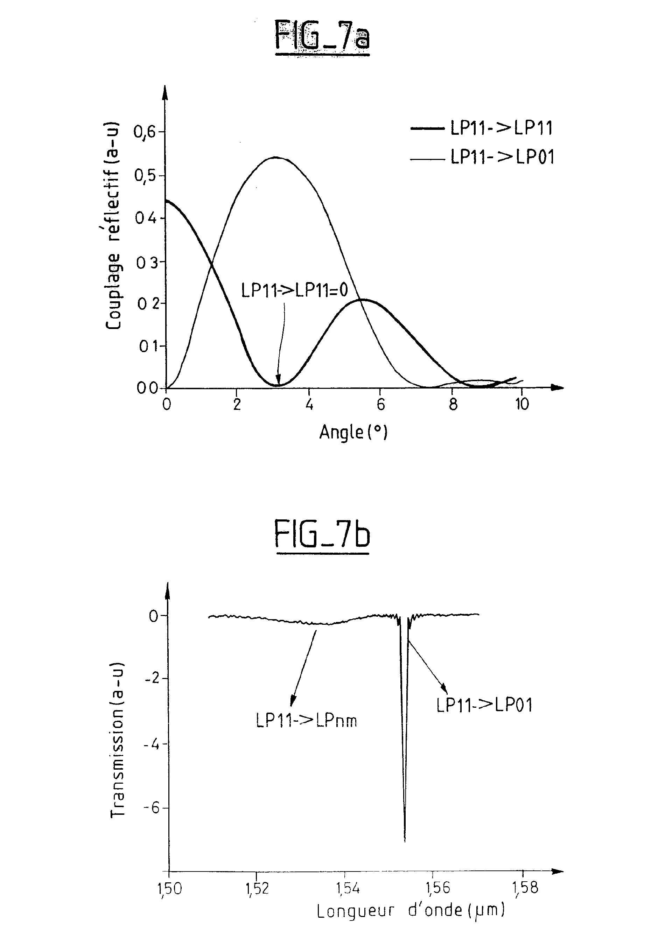

Les séries de figures 6 et 7 illustrent les propriétés d'un filtre selon l'invention par rapport à ceux de l'art antérieur.

Une fibre standard bimode avec un coeur photosensible de 4 microns a été utilisée pour inscrire un SBG et observer la réponse spectrale avec un signal incident au SBG selon le mode LP01 (figures 6a et 6b) et avec un signal incident au SBG selon le mode LP1 (figures 7a et 7b).

Les graphes des figures 6a et 7a représentent en unités arbitraires les couplages réflectifs respectivement des modes LP01 et LP11 en fonction de l'angle d'inscription du SBG. Dans les deux cas, on choisit un angle d'inscription du réseau SBG tel que le couplage du mode incident sur lui-même soit nul. Lorsque le signal incident au SBG se propage selon le mode LP01, on inscrit le réseau à 6 °; et lorsque le signal incident se propage selon le mode LP11, on inscrit le réseau à 3.2°.

La figure 6b représente en unités arbitraires le spectre de transmission d'un SBG inscrit à 6 ° avec un signal optique incident se propageant selon le mode LP01. La figure donne aussi la signature spectrale des couplages et on constate que le couplage en contra-propagation du mode LP01 sur le mode LP11 est fort, mais que le couplage du LP01 sur les modes de gaine est non négligeable. La réponse spectrale d'un tel filtre est donc étroite et contrastée mais seulement sur une faible bande. Ainsi, si l'on souhaite inscrire plusieurs SBG pour réaliser des filtres à des longueurs d'onde distinctes mais proches les unes des autres, la traînée constituée par le couplage dans les modes de gaine peut polluer la réponse d'un autre filtre.

La figure 7b représente en unités arbitraires le spectre de transmission d'un SBG inscrit à 3.2 ° avec un signal optique incident se propageant selon le mode LP11. On constate que le couplage en contra-propagation du mode LP11 sur le mode LP01 est fort et que le couplage du LP11 sur les modes de gaine est négligeable par rapport au couplage LP11 sur LP01. Le filtre selon l'invention permet donc bien de supprimer la traînée du couplage des modes de gaine dans le cas d'une inscription de plusieurs SBG à des longueurs d'onde distinctes mais proches les unes des autres.

L'invention permet ainsi de réaliser un filtre élémentaire qui couple l'énergie du mode incident dans un seul mode. Il est donc possible de travailler la forme du filtre spectralement, par exemple on réalisant un SBG chirpé apodisé afin de constituer un filtre complexe. La variation du pas (chirp) permet des couplages à des longueurs d'onde distinctes et une variation de l'amplitude de modulation de photo-inscription le long du réseau, c'est-à-dire l'apodisation, permet de donner un poids différent à chaque longueur d'onde.

Le filtre selon l'invention peut également comprendre une pluralité de SBG concaténés ou un SBG échantillonné sur une portion de fibre multimode.

De tels filtres trouvent des applications à l'égalisation de gain, en particulier pour constituer des profils complexes requis dans le cas d'amplification de signaux DWDM; ou au multiplexage de signaux DWDM, pour extraire certaines longueurs d'onde parmi plusieurs proches les unes des autres.

## Revendications

1. Filtre optique non réflecteur comprenant :
- un premier convertisseur de mode, convertissant un signal optique incident se propageant selon un mode incident en un signal se propageant selon un mode de propagation d'ordre supérieur (LPnm) à celui dudit mode incident;
- un second convertisseur de mode, convertissant le signal optique d'ordre de propagation supérieur (LPnm) en un signal se propageant selon le mode de propagation incident ;
- un réseau de Bragg en angle (SBG) disposé entre lesdits premier et second convertisseurs de mode, et adapté pour coupler en contra-propagation le signal optique d'ordre de propagation supérieur (LPnm) sur ledit mode incident.

2. Filtre optique selon la revendication 1, **caractérisé** en ce le signal optique incident se propage selon le mode fondamental LP01.

3. Filtre optique selon la revendication 1 à 2, **caractérisé en ce que** le mode d'ordre supérieur est le mode LP11.

4. Filtre optique selon la revendication 1 à 2, **caractérisé en ce que** le mode d'ordre supérieur est le mode LP0m.

5. Filtre selon l'une quelconque des revendications 1 à 4, **caractérisé en ce que** le réseau, le premier et le second convertisseurs de modes sont intégrés dans un même guide d'onde continu.

6. Filtre optique selon l'une des revendications 4 à 5, **caractérisé en ce qu'**au moins un des convertisseurs de mode est un effilement du guide optique.

7. Filtre optique selon l'une des revendications 1 à 5, **caractérisé en ce qu'**au moins un des convertisseurs de mode est un réseau à long pas (LPG).

8. Filtre optique selon l'une des revendications 1 à 5, **caractérisé en ce qu'**au moins un des convertisseurs de mode est un convertisseur en espace libre.

9. Filtre optique selon l'une des revendications précédentes, **caractérisé en ce que** le réseau (SBG) est à pas variable (chirpé).

10. Filtre optique selon l'une des revendications précédentes, **caractérisé en ce que** le réseau (SBG) est apodisé.

11. Filtre optique selon l'une des revendications 1 à 9, **caractérisé en ce qu'**il comprend une pluralité de réseaux (SBG) concaténés.

12. Filtre optique selon l'une des revendications 1 à 9, **caractérisé en ce que** le réseau (SBG) est échantillonné.

13. Egaliseur de gain comprenant un filtre optique selon l'une des revendications 1 à 12.

14. Multiplexeur comprenant un filtre optique selon l'une des revendications 1 à 12.
